# EUROPÄISCHE PATENTSCHRIFT

(11) **EP 0 896 037 B1**
(45) Veröffentlichungstag und Bekanntmachung des Hinweises auf die Patenterteilung: **11.01.2006**
(21) Anmeldenummer: 98108361.1
(22) Anmeldetag: 07.05.1998
(51) Int. Cl.: C09D 11/00

(54) **Tintenset zur Verwendung in Tintenstrahldruckern**
Ink set for ink jet printers
Assortiment d'encres pour imprimantes à jet d'encre

(30) Priorität: 07.08.1997 DE 19734241
(43) Veröffentlichungstag der Anmeldung: 10.02.1999
(73) Patentinhaber: PELIKAN PRODUKTIONS AG, 8132 Egg (CH)
(72) Erfinder: Loosli, Daniel, 8610 Uster (CH)
(74) Vertreter: Hagemann, Heinrich

(56) Entgegenhaltungen:
- EP-A- 0 595 523
- EP-A- 0 633 142
- EP-A- 0 753 551
- EP-A- 0 838 507
- GB-A- 2 315 493
- GB-A- 2 315 759
- US-A- 5 531 816

## Beschreibung

Die vorliegende Erfindung betrifft ein Tintenset zur Verwendung in Tintenstrahldruckern.

Der Tintenstrahldruck (Ink-Jet-Druck) findet, insbesondere für sogenannte "Desk Top Publishing"-Anwendungen, zunehmende Verbreitung, was insbesondere auf seine Fähigkeit zurückzuführen ist, mehrfarbige Aufdrucke durch Auftrag von drei oder mehreren Primärtinten auf ein Substrat in einem einzigen Durchlauf zu erstellen. Andere Druckverfahren erfordern im allgemeinen für jede Primärfarbe einen Durchlauf durch den Drucker. Ein wichtiger Vorteil der Tintenstrahldrucker liegt außerdem in deren günstigem Preis.

Thermische Tintenstrahldruckysteme spielen eine besonders wichtige. Rolle. Diese weisen ein Tintenreservoir in flüssigkeitsleitender Verbindung mit einem Druckkopf auf, auf dem sich eine Mehrzahl von Widerständen befinden. Die selektive Aktivierung der Widerstände verursacht eine thermische Anregung der Tinte und deren Herausschleudern. Beispielhafte thermische Tintenstrahldrucksysteme werden in den US-PSen 4 500 895 und 4 794 409 beschrieben. Andere Systeme beruhen auf der sogenannten Piezo-Technik, bei der durch einen Stromimpuls ein Piezo-Element angeregt wird und dadurch ein Tintentropfen herausgeschleudert wird.

Durch Einsatz spezieller Tintenstrahl-Druckköpfe mit einer Mehrzahl einzelner Tintenkompartimente ist die Erzeugung mehrfarbiger Bilder möglich. Jedes Kompartiment hält eine ausgewählte Tinte mit speziellen Farbeigenschaften vor. Durch Vereinigen dieser Tintenmaterialien auf einem Substrat, z.B. Papier, in variierenden Konfigurationen und Mengen können mehrfarbige Bilder mit hoher Auflösung und Klarheit hergestellt werden.

Beim Herstellen mehrfarbiger Bilder durch den Tintenstrahldruck tritt jedoch ein Problem auf, wenn eine Tinte einer Farbe auf oder in unmittelbarer Nähe neben einer Tinte einer anderen Farbe aufgetragen wird. Das Problem äußert sich in einem Vermischen oder Ineinanderlaufen der zwei Tinten an ihrer Grenzfläche, wodurch die Grenzlinie zwischen den Tinten verunklart wird, z.B. an den äußeren Kanten. Wenn z.B. ein schwarzer Bildbezirk unmittelbar neben einen gelben Bildbezirk gedruckt wird, wird meistens eine Diffusion der scharzen Tinte in die gelbe Tinte beobachtet. Es werden unzureichende Bilder mit schlechter Auflösung erhalten. Dieses Phänomen ist Fachleuten auf dem Gebiet der Drucktechnologie auch unter der Bezeichnung "Colourbleeding" bekannt. Zusätzlich können Probleme des Ineinanderlaufens der Farben bei Mehrfachtintensystemen durch Kapillarkräfte hervorgerufen werden, die von den gewöhnlich verwendeten Papiersubstraten herrühren. Diese Kapillarkräfte führen dazu, daß Drucktinten in benachbarte Bereiche gesogen werden. Auch dies führt zu einem Ausdruck schlechter Qualität und Auflösung.

Zur Verminderung bzw. Verhinderung des Ineinanderlaufens der Tinten an den Berührungslinien sind bereits verschiedene Verfahren vorgeschlagen worden. So sollte durch eine schnellere Penetration der Tinten in das zu bedruckende Medium das Problem des Bleedings minimiert werden. Eine derartige schnellere Penetration kann durch den Zusatz oberflächenaktiver Stoffe, wie Tenside, Netzmittel, Alkohole, Lösungsmittel und dergleichen, zu den Drucktinten erreicht werden. Dies wird z.B. in den US-PSen 5 106 416 und 5 196 056 vorgeschlagen. Dieser Ansatz zur Problemlösung führt nur zu einer unzureichenden Verminderung des Bleedings. Weitere Nachteile bestehen in einem erhöhten "Feathering", d.h., die Tinten neigen nun noch stärker dazu, den Papierfasern entlangzulaufen. Durch die schnellere Penetration in das Papier wird auch der an der Papieroberfläche zur Verfügung stehende Anteil des Farbstoffes kleiner. Dies führt zu einer Reduzierung der optischen Dichte und wirkt sich besonders stark bei schwarzer Tinte auf weißem Papier aus. Zusammenhängende Farbflächen erscheinen nicht mehr satt schwarz, sondern grau.

Bei einer Modifikation dieses Verfahrens wird an den Berührungsflächen eine schnell penetrierende Tinte unter eine langsam penetrierene Tinte gedruckt. Dadurch penetriert an diesen Stellen auch die langsam penetrierende Tinte schneller in das Papier, und das Bleeding wird reduziert. Der Druckvorgang wird hierbei durch eine speziell programmierte Software gesteuert. Vorzugsweise ist die scharze Tinte die langsam penetrierende Tinte und eine farbige Tinte die schnell penetrierende Tinte. Auch bei dieser Modifikation wird das Bleeding insgesamt zu wenig vermindert. Außerdem wird ein schwächeres und im Farbton unterschiedliches Schwarz erhalten.

Bei einer anderen Modifikation werden an den Berührungsflächen alle Farben übereinandergedruckt, wobei die farbigen Tinten schnell penetrierende Tinten sind und die schwarze Tinte eine langsam penetrierende Tinte ist. Auch bei diesem Vorschlag wird die optische Dichte der schwarzen Tinte wiederum durch die schnellere Penetration vermindert, dies wird jedoch durch die Mischfarbe der Farbtinten ergänzt, die aufgrund der subtraktiven Farbmischung zu einem schwarzen Farbton führen. Die Nachteile bestehen auch hier in einer unzureichenden Verminderung des Bleedings und einem im Farbton unterschiedlichen Schwarz.

Ein anderer Vorschlag ist in der EP 0 705 889 A1 vorgestellt, der sich_gelbildender Tinten bedient. Eine Tinte, vorzugsweise die schwarze Tinte, enthält ein gelbildendes Reagenz und eine andere Tinte, vorzugsweise die farbigen Tinten, ein gelinitiierendes Reagenz. Beim Zusammentreffen an der Berührungslinie bildet sich zwischen den beiden Tinten eine Gelbarriere. Das gebildete Gel trocknet allerdings sehr langsam, wodurch die Wischfestigkeit verschlechtert wird. Außerdem besitzen die Tinten eine unzureichende Lagerstabilität, weil durch die Gegenwart des gelbildenden bzw. gelinitiierenden Reagenzes ein höheres Instabilitätsrisiko hervorgerufen wird. Beim Eintrocknen der Tinte an der Druckerdüse erhöht sich die Viskosität außerdem sehr stark, was zu einem erhöhten Risiko des Verstopfens ("Clogging") führt.

Als Markprodukt ist ferner ein Tintenset bekannt, bei dem eine erste Tinte einen Farbstoff enthält, der durch ein Fällungsreagenz ausgefällt werden kann. Eine zweite Tinte enthält das Fällungsreagenz neben einem zweiten Farbstoff. Nachteilig ist hierbei, daß das Fällungsreagenz der zweiten Tinte in hoher Konzentration beigemischt werden muß, was ein beträchtliches Instabilitätsrisiko bzw. Kogationsrisiko mit sich bringt. Der hohe Anteil an Fällungsreagenz kann außerdem zu Korrosionsproblemen führen. Die Fällungsmittel sind z.B. höhervalente Metallsalze, wie Ca²⁺, Cu²⁺, Co²⁺, Ni²⁺ usw. Die Auswahl an Farbstoffen, die in der zweiten Tinte vorliegen können, ist sehr begrenzt, da nur solche Farbstoffe in Betracht kommen, die in Anwesenheit des Fällungsreagenzes über längere Zeit löslich bzw. dispergiert bleiben.

Die EP-A-0 753 551 bezieht sich auf ein Tintenset zur Verhinderung des Bleedings beim Mehrfarbendruck. Dieser Tintenset umfasst a) eine erste pigmentierte kationische Tinte mit einem wässrigen Trägermedium, einem Pigment und einem polymeren Dispergiermittel mit mindestens einer quartären Amingruppe sowie b) eine zweite kationische Tinte mit einem wässrigen Trägermedium, einem Farbmittel und bis zu 20% eines Polymers, worin der Farbstoff oder das Polymer mindestens eine Sulfonat- oder Phosphonatgruppe aufweisen. Nach der bekannten Lehre ist es wesentlich, dass beide Tinten denselben ionischen Charakter haben, d.h. dass beide Tinten kationisch sind. Demzufolge wird das sog. "Colourbleeding" dadurch unterbunden, dass zwischen den gleich geladenen Tinten die bekannte statische Abstoßung stattfindet.

Die EP-A-0 633 142 beschreibt ein Verfahren mit reduziertem Colourbleeding, umfassend mindestens eine anionische Tinte und mindestens eine kationische Tinte, die beide ein wässriges Medium und ein Farbmittel aufweisen, wobei mindestens eine der Tinten etwa 0,1 bis 30 Gew.% eines Polymers mit demselben ionischen Charakter wie die Tinte besitzt und beide Tinten auf dem Substrat miteinander in Kontakt gebracht werden. Demnach muss mindestens eine der beiden Tinten ein Polymer enthalten, damit die dortige technische Lehre verwirklicht werden kann. Das Polymehr kann in Form eines Dispergiermittels für die pigmentierte Tinte vorliegen oder es kann unabhängig vom Farbmittel zur Tinte selbst zugegeben werden. Es muss also ein Polymer vorliegen, welches ausgefällt wird, um zwischen den kationischen und anionischen Tinten eine physikalische Barriere zu bilden.

Die ältere EP-A-0 838 507 beschreibt u.a. ein Tintenset für den Tintenstrahldrucker, das Carbon Black mit einer kationischen Gruppe an der Oberfläche sowie mindestens eine weitere Farbtinte, ausgewählt aus gelber Tinte, Magenta- oder Cyan-Tinte aufweist, die vorzugsweise einen anionischen Farbstoff darstellen kann. Desweiteren wird erwähnt, dass die kationische Gruppe mit dem anionischen Farbstoff reagieren kann, so dass das Bleeding vermieden wird.

Die nachfolgend beschriebene Erfindung schließt das Merkmal "Carbon Black mit einer kationischen Gruppe an der Oberfläche" aus.

Der vorliegenden Erfindung lag daher die Aufgabe zugrunde, ein Mehrfarben-Tintenstrahldruckverfahren bereitzustellen, das die vorstehend geschilderten Nachteile nicht aufweist und bei dem insbesondere das Bleeding an den Berührungslinien unterschiedlicher Farben ausreichend reduziert ist, wobei der Farbton der gedruckten Tinte nicht verändert wird, eine hohe optische Dichte der Tinten erhalten bleibt und die verwendeten Drucktinten ausreichende Lagerstabilität aufweisen.

Die Anmelderin hat überraschenderweise gefunden, dass diese Probleme verhindert oder stark zurückgedrängt werden, wenn ein Tintenset verwendet wird, bei dem eine erste Tinte ein in einem wässrigen Tintenmedium - gegebenenfalls unter Zuhilfenahme eines Dispergiermittels - dispergiertes erstes Farbpigment enthält und das Farbmittel einer zweiten Tinte als Fällungsmittel für das erste Farbpigment wirkt.

Demzufolge betrifft die Erfindung in einer Ausführungsform ein Tintenset zur Verwendung in Tintenstrahldruckern, umfassend a) eine erste Tinte, die enthält: (a1) ein wässriges Tintenmedium, (a2) ein im Tintenmedium dispergiertes erstes Farbpigment und (a3) fakultativ ein erstes Dispergiermittel, wobei das erste Farbpigment und/oder das erste Dispergiermittel ionische Gruppen tragen, b) eine zweite Tinte, die enthält: (b1) ein wässriges Tintenmedium, (b2) einen im Tintenmedium löslichen Farbstoff, wobei der lösliche Farbstoff als Fällungsmittel für das erste Farbpigment wirkt, wobei Carbon Black mit einer kationischen Gruppe an der Oberfläche ausgenommen ist.

In einer weiteren Ausführungsform betrifft die Erfindung ein Tintenset zur Verwendung in Tintenstrahldruckern, umfassend a) eine erste Tinte, die enthält: (a1) ein wässriges Tintenmedium, (a2) ein im Tintenmedium dispergiertes erstes Farbpigment und (a3) fakultativ ein erstes Dispergiermittel, wobei das erste Farbpigment und/oder das erste Dispergiermittel ionische Gruppen tragen, b) eine zweite Tinte, die enthält: (b1) ein wässriges Tintenmedium und (b2) ein zweites Farbpigment und fakultativ ein zweites Dispergiermittel, wobei das zweite Farbpigment als Fällungsmittel für das erste Farbpigment wirkt, wobei Carbon Black mit einer kationischen Gruppe an der Oberfläche ausgeschlossen ist.

In einer dritten Ausführungsform betrifft die Erfindung ein Tintenset zur Verwendung in Tintenstrahldruckern, umfassend a) eine erste Tinte, die enthält: (a1) ein wässriges Tintenmedium, (a2) ein im Tintenmedium dispergiertes erstes Farbpigment und (a3) fakultativ ein erstes Dispergiermittel, wobei das erste Farbpigment und/oder das erste Dispergiermittel ionische Gruppen tragen, b) eine zweite Tinte, die enthält: (b1) ein wässriges Tintenmedium und (b2) ein in einem Wasser unlöslichen lösungsmittelgelösten Solventfarbstoff, fakultativ mit einem Emulgator für dieses System, wobei der Solventfarbstoff, der Emulgator und/oder das wasserunlösliche Lösungsmittel als Fällungsmittel für das erste Farbpigment wirken.

Es ist bevorzugt, dass der Emulgator eine hohe Ionenstärke aufweist. Auch ist es bevorzugt, dass das wasserunlösliche Lösungsmittel eine hohe Ionenstärke aufweist.

Erfindungsgemäß enthält die erste Tinte ein dispergiertes Farbpigment. Pigmentdispersionen weisen Pigmentteilchen auf, die hinreichend klein sind, damit sie einen störungsfreien Fluß der Tinte durch die tintenführenden Teile des Druckers, insbesondere durch die Druckdüsen gewährleisten, und die im allgemeinen eine Teilchengröße von 25 bis 500 µm haben. Die Teilchengröße hat auch einen Einfluß auf die Stabilität der Pigmentdispersion. Die erste Tinte kann fakultativ ein erstes Dispergiermittel enthalten. Das erste Farbpigment oder das erste Dispergiermittel oder sowohl Farbmittel und als auch Dispergiermittel tragen ionische Gruppen. Ionische Gruppen können durch oberflächliche Modifizierung der Pigmente, z.B. durch Sulfonierung, Carboxylierung oder Einführung von Aminogruppen eingeführt werden. Als Beispiel läßt sich oberflächenmodifizierter Ruß, z.B. oberflächlich oxidierter Ruß, anführen. Dispergiermittel, die ionische Gruppen tragen sind vor allem Blockcopolymere mit Blöcken ionischer Monomere, wie 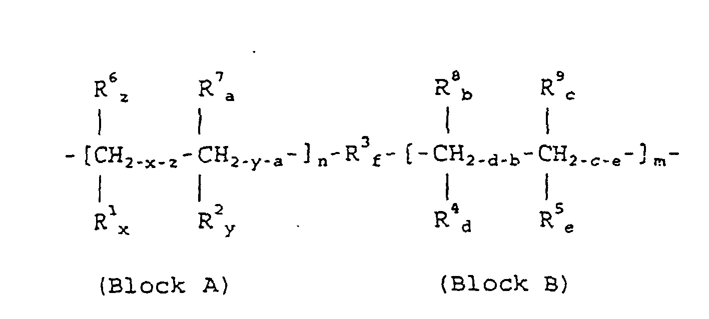
wobei x, y, a, b, c, d, e = 0 oder 1; x+y+z+a oder b+c+d+e = 1, 2 oder 3; f = 0, 1, 2, 3, vorzugsweise 0; R³ = -CH₂-; -O-; -NH-;...; und R¹, R², R⁴, R⁵, R⁶, R⁷, R⁸, R⁹ die funktionellen Gruppen sind.

Gute Stabilität von Pigmenten in Wasser wird vor allem dann erreicht, wenn der ein Block hydrophil und ein weiterer Block hydrophobe funktionelle Gruppe enthält. Die Anordung der Blöcke ist entweder ...AAABBB... oder ...ABABABAB... oder ...ABBAABAAABB... Beispiele hydrophiler funktioneller Gruppen sind: Carbonsäure-, Amin-, Pyrrolidongruppen und deren Derivate. Beispiele für hydrophobe funktionelle Gruppen sind die Alkyl- sowie die Phenyl-Gruppe und dergleichen. Vorzugsweise liegt pro Block nur eine funktionelle Gruppe vor. Die weiteren Reste sind dann z.B.: -H; CH₃ usw.

Geeignete Beispiele sind des weiteren Acrylat-Styrol-Blockcopolymere (= Carboxy-Phenyl-Blockcopolymer), Pyrrolidon-Acrylat-Blockcopolmyere und dergleichen.

Die dispergierten Pigmentteilchen der ersten Tinte können gefällt, d.h. koaguliert werden. Hierbei agglomerieren die farbtragenden Teilchen. Erfindungsgemäß geschieht dies durch das Farbmittel in der zweiten Tinte. Vorzugsweise geschieht die Fällung dadurch, daß das Farbmittel der zweiten Tinte zu einer solchen Ionenstärke der zweiten Tinte beiträgt, daß sich bei Vermischen von erster und zweiter Tinte eine Ionenstärke einstellt, die über der für die Ausfällung des ersten Farbpigmentes kritischen Ionenstärke liegt. Durch die Erhöhung der Ionenstärke verkleinert sich der Radius der Helmholtz-Doppelschicht und somit der Abstand zweier dispergierter Teilchen. Wird der Abstand zweier Teilchen unter einen bestimmten Wert verkleinert, dann agglomerieren diese Teilchen und die Dispersion wird instabil. Somit kann ein dispergiertes Pigment durch Erhöhen der Ionenstärke ausgefällt werden. Die Ionenstärke, bei der die Fällung des Pigments beginnt, wird kritische Ionenstärke genannt. Die kritische Ionenstärke hängt vom jeweiligen Farbpigment und dem fakultativ eingesetzten Dispergiermittel ab.

Alternativ trägt das Farbmittel der zweiten Tinte eine zur Ladung des ersten Farbpigments und/oder des ersten Dispergiermittels entgegengesetzte Ladung. Die Gruppen der entgegengesetzten Ladung weisen eine hohe Affinität zu den stabilisierenden ionischen Gruppen des ersten Farbpigments bzw. des ersten Dispergiermittels auf. Dadurch wird die Solvatisierbarkeit beider Gruppen stark reduziert und die dispergierten Pigmente agglomerieren und fallen aus.

In der ersten Ausführungsform der Erfindung ist das Farbmittel der zweiten Tinte ein im Tintenmedium löslicher Farbstoff. Vorzugsweise weist der lösliche Farbstoff mindestens zwei ionische Gruppen auf. Als Beispiele lassen sich hierfür direct blue 1, direct blue 70, direct blue 84, acid red 1, acid red 35, acid red 41, direct red 99, direct yellow 34 und direct yellow 51 anführen.

Andererseits kann der lösliche Farbstoff mit einer chemischen Verbindung konjugiert sein, die mindestens zwei Ladungen trägt. Diese chemischen Verbindungen können über kovalente oder ionische Bindungen mit dem löslichen Farbstoff koordiniert sein. Vorzugsweise ist der lösliche Farbstoff mit einem di- oder multivalenten Gegenion konjugiert. Die di- oder multivalenten Gegenionen können z.B. Ca²⁺, Cu²⁺, Mg²⁺, Ni²⁺, La³⁺, Nd³⁺, Y³⁺ und Al³⁺ sein. Beispiele für Konjugate von löslichen Farbstoffen mit di- oder multivalenten Gegenionen sind unter anderem: Acid yellow 23 Calciumsalz, Direct blue 199 Magnesiumsalz, Acid red 52 Magnesiumsalz, Acid yellow 23 Ethylendiammoniumsalz usw.

Andere Beispiele für geeignete Konjugate im Sinne der Erfindung sind reactiv red 180 umgesetzt mit Triethylenamin, reactiv red 180 umgesetzt mit Polyethylenimin, reactiv yellow 37 umgesetzt mit Tributylenamin.

In der zweiten Ausführungsform der Erfindung enthält die zweite Tinte ein zweites dispergiertes Farbpigment und fakultativ ein zweites Dispergiermittel. Das zweite Farbpigment und/oder das zweite Dispergiermittel wirken als Fällungsmittel für das erste Farbpigment. Dies wird vorzugsweise dadurch erreicht, daß das zweite Farbpigment und/oder das zweite Dispergiermittel zu einer solchen Ionenstärke der zweiten Tinte beitragen, daß sich beim Vermischen von erster und zweiter Tinte eine Ionenstärke einstellt, die über die für die Ausfällung der ersten Farbpigmentes kritischen Ionenstärke liegt. Andererseits können das zweite Farbpigment und/oder das zweite Dispergiermittel eine zur Ladung des ersten Farbpigments entgegengesetzte Ladung tragen. Beispiele geeigneter zweiter Farbpigmente, die allein oder in Verbindung mit einem Dispergiermittel das erste Farbpigment ausfällen können, sind unter anderem: Kationisch oberflächenmodifiziertes Pigment, Pigment blue 15:3 mit Glucquat® 100 (Laurylmethylgluceth-10-hydroxypropyl-dimoniumchlorid / CTFA-angepaßter Name) dispergiert, Pigment yellow mit Gafquat® HS-100 (Methacrylamidopropyl-trimethylammonium-chlorid) / quartäres Copolymer in Form eines Copolymers aus Polyvinylpyrrolidon und Methacrylamidpropyl-trimethylammonium-chlorid (MAPTAC) dispergiert, Pigment red 122 mit Polyethylenimin dispergiert, Pigment yellow 3 mit Ethoquat® C 25 (Coco-N-methyldipolyethylenglykolchlorid) dispergiert, Pigment red 170 mit Varonic® K210 (Polyethylenglykol(1)cocoamin) dispergiert.

Das zweite Dispergiermittel kann vorzugsweise ein Polyelektrolyt sein. Geeignete Beispiele hierfür sind Styrol-Phosphat-Blockcopolymere, quaternäre Amin-Pyrrolidon-Blockcopolymere, quaternäre Amin-Glycose-Blockcopolymere und PVP-Dimethylaminomethylmethacrylat-Blockcopolymer.

In der dritten Ausführungsform der Erfindung umfaßt die zweite Tinte eine Mikroemulsion als-Farbsystem. Bei einer Mikroemulsion liegt ein lösungsmittellöslicher Farbstoff gelöst in einem Lösungsmittel vor, das mit dem Tintenmedium nicht mischbar ist. Die Farbstofflösung ist im Tintenmedium sehr fein emulgiert. Die Tröpfchengröße der Farbstofflösung ist hinreichend klein, so daß daraus eine stabile Emulsion resultiert. Im allgemeinen ist hierzu ein Emulgator erforderlich. Erfindungsgemäß können der Solventfarbstoff, der Emulgator und/oder das Lösungsmittel als Fällungsmittel für das erste Farbpigment wirken. Vorzugsweise trägt der Emulgator zu einer solchen Ionenstärke der zweiten Tinte bei, daß sich beim Vermischen von erster und zweiter Tinte eine Ionenstärke einstellt, die über der für die Ausfällung des ersten Farbpigmentes kritischen Ionenstärke liegt. Alternativ weist der Emulgator eine zur Ladung des ersten Farbpigmentes und/oder des ersten Dispergiermittels entgegengesetzten Ladung auf. In einer weiteren Alternative kann das Lösungsmittel eine solche Ionenstärke aufweisen, daß sich beim Vermischen von erster und zweiter Tinte eine Ionenstärke einstellt, die über der für die Ausfällung des ersten Farbpigments kritischen Ionenstärke liegt. Geeignete Beispiele für Solventfarbstoffe sind Solvent yellow 79, Solvent yellow 82, Solvent yellow 160, Solvent yellow 93, Disperse yellow 201, Solvent red 218, Solvent red 127, Solvent red 91, Disperse violett 31, Solvent blue 70, Solvent blue 38, Solvent blue 97, Solvent blue 44. Geeignete Beispiele für Lösungsmittel sind Toluol, Phenylglykolether, Alkanole, Alkane, Fette/Öle, Cyclohexan, Stearinsäure, Ethylacetat. Geeignete Beispiele für Emulgatoren sind solche aus der Gruppe der Amphiphile, wie Naphthylpolypropylenglykolpropylsulfonat (Ralufon Nape® 14-90), Octylpyrrolidon (Surfadon® LP 100), Liposome (z.B. Nathin® 140), Dimethyldodecylnoxid und dergleichen.

Das Tintenmedium der ersten und zweiten Tinte des erfindungsgemäßen Tintensets ist wäßrig. Es enthält Wasser oder ein Gemisch aus Wasser und einem oder mehreren wassermischbaren organischen Lösungsmitteln. Die Auswahl eines geeigneten Gemisches richtet sich nach den Anforderungen der jeweiligen Anwendung, wie der gewünschten Oberflächenspannung, dem Farbmittel, der Trocknungszeit und dem zu bedruckenden Substrat. Der Fachmann kann anhand einfacher Versuche ein geeignetes Tintenmedium ermitteln.

Die Tinten können Lösungsmittel, wie n-Propanol, 1,2-Butandiol, 2-Isopropyloxyethanol, Benzamid, Benzylalkohol, Butyldiglykol, Butylglykol, Butyltriglykol, Butyrolacton, Diisopropanolamin, Dimethylimidazolidanon, Dipropylenglykol-n-propylether, Dipropylenglykolmonobutylether, Dipropylenglykolmomethylether, Ethanol, Ethylacetat, Ethylencarbonat, Ethylenglykolphenylether, Isopropanol, N,N-Butyl-1-ethanolamin, n-Butanol, N-Methylpyrrolidon, Polypropylenglykol, Propylen-Ethylenglykol-Blockpolymer und Propylencarbonat, enthalten. Sie können außerdem Biozide enthalten. Die Tinten können weitere Emulgatoren, wie z.B. Dodecylamin, das Natriumsalz von N-Coco-3-aminobuttersäure, Cocotrimethylammoniumchlorid, Didecylmethylalkoxammoniumpropionat, N-Cocodiaminopropan usw., Feuchthaltemittel, wie 1,1,1-Trishydroxymethylpropan, 1,2,6-Hexantriol, 1,3-Dimethylimidazolidinon, 1,4-Butandiol, 1,6-Hexandiol, 2-Methyl-2,4-pentandiol, 2-Hydroxybenzylalkohol, 2-Pyrrolidon, 5-Aminobenzoesäure usw., Verdickungsmittel, wie Alginsäure, Polyvinylpyrrolidon-Polymere und -Copolymere, Alginate, Polyacrylsäuren usw., Tenside, wie Alkylphenyl-PEG, PEG-Stearylether, Alkylpolyglycoside, Alkylsulfonate, ethoxylierte Fettalkohole, Alkylsulfopropylammoniumbetaine, Alkylphenylsulfonate, Dimeticonpropolyole, Alkylpyrrolidone usw. enthalten.

Das erfindungsgemäße Tintenset umfaßt mindestens zwei Tinten. Es kann jedoch auch drei und mehr Tinten, beispielsweise bis zu sechs Tinten, umfassen. Bei Ausführungsformen mit mehr als zwei Tinten ist wesentlich, daß mindestens zwei Tinten untereinander in funktioneller Wechselwirkung stehen, wie vorstehend beschrieben.

Die Erfindung soll nun anhand von Beispielen näher erläutert werden:

### Beispiele

Die Tinten wurden nach den in den nachfolgenden Tabellen 1 und 2 bezeichneten Rezepturen hergestellt. Bei der schwarzen Tinte sowie den drei Vergleichstinten wurden die Substanzen in der genannten Reihenfolge zusammengegestellt und nach einstündigem Rühren filtriert (3 Micron).

Bei den Beispielen 1, 8, 9, 10 und 16 wurde das Pigment mit dem Dispergator vermischt. Es wurde anschließend soviel entmineralisiertes Wasser beigemischt, bis die Lösung rührbar wurde (bei verschiedenen Dispersionen war kein Wasser notwendig). Unter intensivem Rühren wurden die Partikel mittels Ultraschall nochmals verkleinert. Dabei kam es verschiedentlich vor, daß sich die Viskosität erhöhte. In solchen Fällen mußte abermals Wasser beigemischt werde. Die so erhaltene Präparation wurde mindestens 2 Tage stehengelassen. Danach wurde die homogene Lösung sorgfältig abdekantiert. Dieser Präparation wurden nun die gleichen Additive wie den Vergleichstinten beigemischt. Die erhaltene Tinte wurde nun durch einen 5µm Filter gelassen. Durch die Verbesserung des Herstellungsverfahrens könnte die Stabilität der Dispersionen entscheidend verbessert werden.

Bei den Beispielen 2, 3, 4, 11 und 14 wurde der Rohfarbstoff in 1/3 der schlußendlich zu verwendenden Wassermenge gelöst. Dazu wurde die moläquivalente Menge LiOH und Amin beigemischt. Die Lösung wurde während einer Stunde bei 60 bis 90°C gerüht. Anschließend wurde der gewünschte pH-Wert mit Essigsäure eingestellt. Der Farbstofflösung wurden nun dieselben Additive wie den Vergleichstinten beigemischt. Es wurde filtriert.

Bei den Beispielen 5, 6, 7, 12, 13 und 15 wurde der Rohfarbstoff mittels Ionenaustauschersäule in die reine Säureform gebracht. Die dabei erhaltene Lösung wurde über eine Kationentauschersäule gelassen, wobei die Säule zuvor mit dem gewünschten Kation (Ca, Mg, EDA) beladen wurde. Der so erhaltene Farbstoff wurde bis zur Trockene eingedampft. Die Tinte wurde nach der Rezeptur in Tabelle 1 bzw. 2 hergestellt und ebenfalls filtriert.

Jeweils 10 ml der Tinten wurden in ein Pelikan-Click gefüllt. Die Clicks wurden anschließend in den jeweiligen Adapter eingeklickt. Mit einem HP Desk Jet 660C wurden dann Bilder ausgedruckt, die Grenzflächen-Schwarz-Testfarbe zeigen. Bewertet wurde dann das Maß, mit welchen sich die Farben auf dem Papier vermischten (vgl. Tabellen).

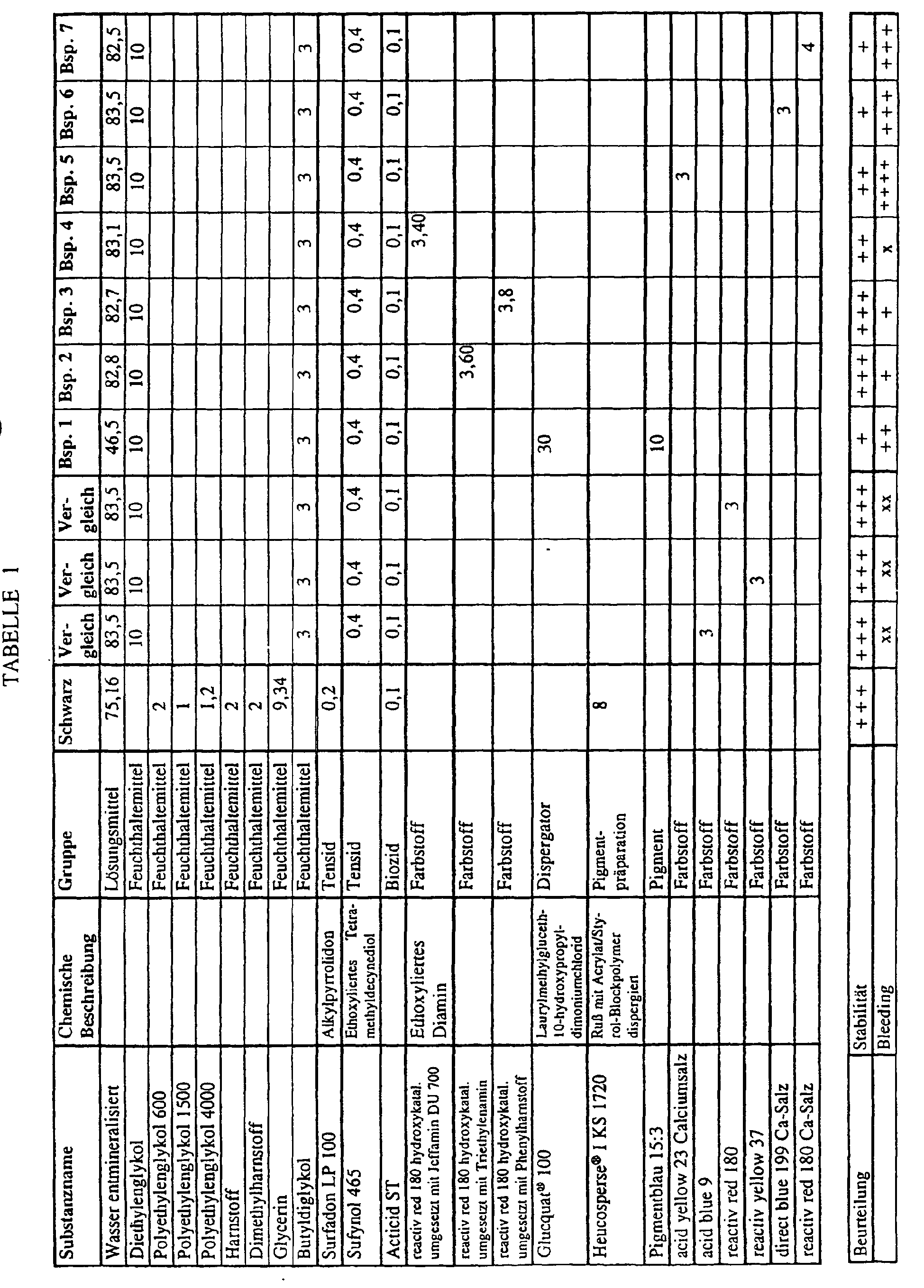

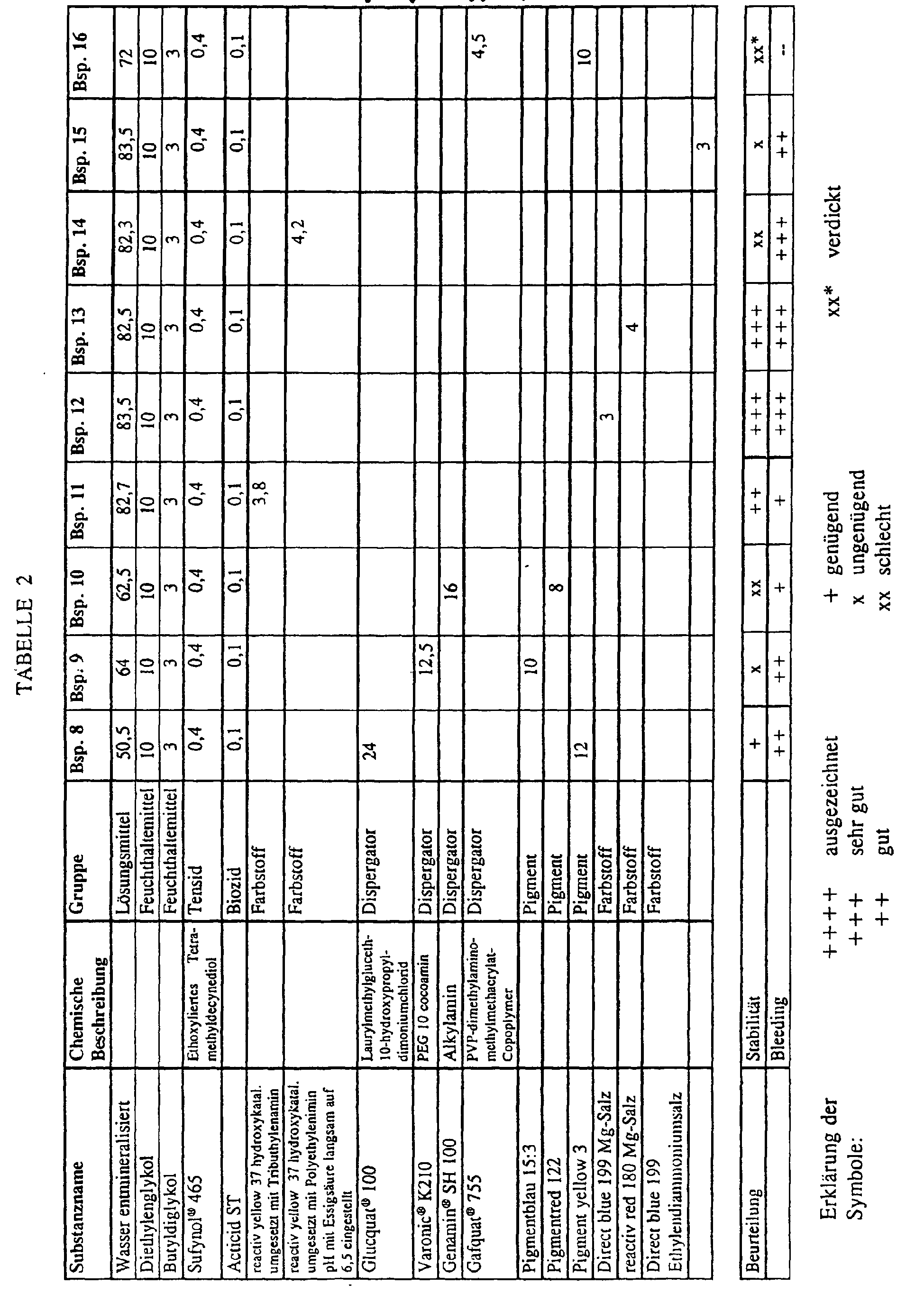

## Patentansprüche

1. Tintenset zur Verwendung in Tintenstrahldruckern, umfassend
a) eine erste Tinte, die enthält:
(a1) ein wäßriges Tintenmedium,
(a2) ein im Tintenmedium dispergiertes erstes Farbpigment und
(a3) fakultativ ein erstes Dispergiermittel,
wobei das erste Farbpigment und/oder das erste Dispergiermittel ionische Gruppen tragen,
b) eine zweite Tinte, die enthält:
(b1) ein wäßriges Tintenmedium,
(b2) einen im Tintenmedium löslichen Farbstoff, wobei der lösliche Farbstoff als Fällungsmittel für das erste Farbpigment wirkt,
wobei Carbon Black mit einer kationischen Gruppe an der Oberfläche ausgenommen ist.

2. Tintenset nach Anspruch 1, **dadurch gekennzeichnet, daß** der lösliche Farbstoff zu einer solchen Ionenstärke der zweiten Tinte beiträgt, das sich beim Vermischen von erster und zweiter Tinte eine Ionenstärke einstellt, die über der für die Ausfällung des ersten Farbpigmentes kritischen Ionenstärke liegt.

3. Tintenset nach Anspruch 1, **dadurch gekennzeichnet, daß** der lösliche Farbstoff eine zur Ladung des ersten Farbpigments und/oder des ersten Dispergiermittels entgegengesetzte Ladung tragen.

4. Tintenset nach einem der vorstehenden Ansprüche, **dadurch gekennzeichnet, daß** der lösliche Farbstoff mindestens zwei inonische Gruppen aufweist.

5. Tintenset nach einem der Ansprüche 1 bis 3, **dadurch gekennzeichnet, daß** der lösliche Farbstoff mit einer chemischen Verbindung konjugiert ist, die mindestens zwei Ladungen trägt.

6. Tintenset nach Anspruch 5, **dadurch gekennzeichnet, daß** der lösliche Farbstoff mit einem di- oder multivalenten Gegenion konjugiert ist.

7. Tintenset zur Verwendung in Tintenstrahldruckern, umfassend
a) eine erste Tinte, die enthält:
(a1) ein wäßriges Tintenmedium,
(a2) ein im Tintenmedium dispergiertes erstes Farbpigment und
(a3) fakultativ ein erstes Dispergiermittel,
wobei das erste Farbpigment und/oder das erste Dispergiermittel ionische Gruppen tragen,
b) eine zweite Tinte, die enthält:
(b1) ein wäßriges Tintenmedium und
(b2) ein zweites Farbpigment und fakultativ ein zweites Dispergiermittel,
wobei das zweite Farbpigment als Fällungsmittel für das erste Farbpigment wirkt,
wobei Carbon Black mit einer kationischen Gruppe an der Oberfläche ausgenommen ist.

8. Tintenset nach Anspruch 7, **dadurch gekennzeichnet, daß** das zweite Farbpigment und/oder das zweite Dispergiermittel zu einer solchen Ionenstärke der zweiten Tinte beitragen, daß sich beim Vermischen von erster und zweiter Tinte eine Ionenstärke einstellt,' die über der für die Ausfällung des ersten Farbpigmentes kritischen Ionenstärke liegt.

9. Tintenset nach Anspruch 7, **dadurch gekennzeichnet, daß** das zweite Farbpigment und/oder das zweite Dispergiermittel eine zur Ladung des ersten Farbpigmentes und/oder des ersten Dispergiermittels entgegengesetzte Ladung tragen.

10. Tintenset nach einem der Ansprüche 7 bis 9, **dadurch gekennzeichnet, daß** das zweite Dispergiermittel ein Polyelektrolyt ist.

11. Tintenset nach Anspruch 10, **dadurch gekennzeichnet, daß** der Polyelektrolyt ein Styrol-Phosphat-Blockcopolymer und/oder ein quaternäres Amin-Glycose-Blockcopolymer ist.

12. Tintenset zur Verwendung in Tintenstrahldruckern, umfassend
a) eine erste Tinte, die enthält:
(a1) ein wäßriges Tintenmedium,
(a2) ein im Tintenmedium dispergiertes erstes Farbpigment und
(a3) fakultativ ein erstes Dispergiermittel,
wobei das erste Farbpigment und/oder das erste Dispergiermittel ionische Gruppen tragen,
b) eine zweite Tinte, die enthält:
(b1) ein wäßriges Tintenmedium und
(b2) ein in einem Wasser unlöslichen lösungsmittelgelösten Solventfarbstoff, fakultativ mit einem Emulgator für dieses System,
wobei der Solventfarbstoff, der Emulgator und/oder das wasserunlösliche Lösungsmittel als Fällungsmittel für das erste Farbpigment wirken.

13. Tintenset nach Anspruch 12, **dadurch gekennzeichnet, dass** der Emulgator eine zur Ladung des ersten Farbpigments und/oder des ersten Dispergiermittels entgegengesetzte Ladung trägt.

14. Tintenset nach einem der vorstehenden Ansprüche, **dadurch gekennzeichnet, dass** das erste Farbpigment ein oberflächenmodifiziertes Pigment ist.

15. Tintenset nach einem der Ansprüche 1 bis 13, **dadurch gekennzeichnet, dass** das erste Dispergiermittel ein Blockcopolymer ist.

16. Tintenset nach Anspruch 15, **dadurch gekennzeichnet, dass** das Blockcopolymer ein Acrylat-Styrol-Blockcopolymer ist.

## Revendications

1. Ensemble d'encres destiné à être utilisé dans des imprimantes à jet d'encre, comprenant
a) une première encre qui contient :
(a1) un milieu aqueux pour encre,
(a2) un premier pigment de couleur dispersé dans le milieu pour encre et
(A3) à tire facultatif, un premier agent dispersant,
le premier pigment coloré et/ou le premier agent dispersant portant des groupes ioniques,
b) une seconde encre, qui contient :
(b1) un milieu aqueux pour encre,
(b2) un colorant soluble dans le milieu pour encre, ce colorant soluble agissant comme un précipitant pour le premier pigment coloré,
à l'exception d'un Carbon Black porteur d'un groupe cationique à la surface.

2. Ensemble d'encres suivant la revendication 1, **caractérisé en ce que** le colorant soluble confère à la seconde encre une force ionique telle qu'il s'établisse, lors du mélange des première et seconde encres, une force ionique qui se situe au-delà de la force ionique critique pour la précipitation du premier pigment coloré.

3. Ensemble d'encres suivant la revendication 1, **caractérisé en ce que** le colorant soluble porte une charge opposée à celle du premier pigment coloré et/ou du premier agent dispersant.

4. Ensemble d'encres suivant l'une des revendications précédentes, **caractérisé en ce que** le colorant soluble porte au moins deux groupes ioniques.

5. Ensemble d'encre suivant l'une des revendications 1 à 3, **caractérisé en ce que** le colorant soluble est conjugué à un composé chimique qui porte au moins deux charges.

6. Ensemble d'encres suivant la revendication 5, **caractérisé en ce que** le colorant soluble est conjugué à un ion complémentaire de valence égale ou supérieure à 2.

7. Ensemble d'encres destiné à être utilisé dans des imprimantes à jet d'encre, comprenant
a) une première encre qui contient :
(a1) un milieu aqueux pour encre,
(a2) un premier pigment coloré dispersé dans le milieu pour encre et,
(a3) à titre facultatif, un premier agent dispersant,
le premier pigment coloré et/ou le premier agent dispersant portant des groupes ioniques,
b) une seconde encre, qui contient :
(b1) un second milieu pour encre et
(b2) un second pigment coloré et, à titre facultatif, un second agent dispersant,
le second pigment coloré agissant comme précipitant pour le premier pigment coloré, à l'exception d'un Carbon Black portant un groupe cationique à la surface.

8. Ensemble d'encres suivant la revendication 7, **caractérisé en ce que** le second pigment coloré et/ou le second agent dispersant confèrent à la seconde encre une force ionique telle qu'il s'établisse, lors du mélange des première et seconde encres, une force ionique qui se situe au-delà de la force ionique critique pour la précipitation du premier pigment coloré.

9. Ensemble d'encres suivant la revendication 7, **caractérisé en ce que** le second pigment coloré et/ou le second agent dispersant portent une charge opposée à celle du premier pigment coloré et/ou du premier agent dispersant.

10. Ensemble d'encres suivant l'une des revendications 7 à 9, **caractérisé en ce que** le second agent dispersant est un polyélectrolyte.

11. Ensemble d'encres suivant la revendication 10, **caractérisé en ce que** le polyélectrolyte est un copolymère séquencé styrène-phosphate et/ou un copolymère séquencé amine quaternaire-glucose.

12. Ensemble d'encres destiné à être utilisé dans des imprimantes à jet d'encre, comprenant
a) une première encre, qui contient :
(a1) un milieu aqueux pour encre,
(a2) un premier pigment coloré dispersé dans le milieu pour encre et,
(a3) à titre facultatif, un premier agent dispersant,
le premier pigment coloré et/ou le premier agent dispersant portant des groupes ioniques,
b) une second encre qui contient :
(b1) un milieu aqueux pour encre et
(b2) un colorant de type Solvent non hydrosoluble dissous dans un solvant avec, à titre facultatif, un émulsifiant pour ce système,
le colorant du type Solvent, l'émulsifiant et/ou le solvant non hydrosoluble agissant comme précipitant pour le premier pigment coloré.

13. Ensemble d'encres suivant la revendication 12, **caractérisé en ce que** l'émulsifiant porte une charge opposée à celle du premier pigment coloré et/ou du premier agent dispersant.

14. Ensemble d'encres suivant l'une des revendications précédentes, **caractérisé en ce que** le premier pigment coloré est un pigment à surface modifiée.

15. Ensemble d'encres suivant l'une des revendications 1 à 13, **caractérisé en ce que** le premier agent dispersant est un copolymère séquencé.

16. Ensemble d'encres suivant la revendication 15, **caractérisé en ce que** le copolymère séquencé est un copolymère séquencé acrylate-styrène.

## Claims

1. An ink set for use in an ink-jet printer, comprising
a) a first ink containing:
(a1) an aqueous ink medium,
(a2) a first colour pigment dispersed in the ink medium, and
(a3) optionally a first dispersant,
wherein the first colour pigment and/or the first dispersant bearing ionic groups,
b) a second ink containing:
(b1) an aqueous ink medium,
(b2) a dye soluble in the ink medium, the soluble dye acting as precipitant for the first colour pigment,
wherein carbon black having a cationic group on the surface being excluded.

2. An ink set according to claim 1, **characterized in that** the soluble dye contributes to an ionic strength of the second ink such that mixing of first and second inks produces an ionic strength that lies above the ionic strength critical for the precipitation of the first colour pigment.

3. An ink set according to claim 1, **characterized in that** the soluble dye bears a charge that is opposite to the charge of the first colour pigment and/or of the first dispersant.

4. An ink set according to any one of the preceding claims, **characterized in that** the soluble dye has at least two ionic groups.

5. An ink set according to any one of claims 1 to 3, **characterized in that** the soluble dye is conjugated with a chemical compound which bears at least two charges.

6. An ink set according to claim 5, **characterized in that** the soluble dye is conjugated with a divalent or polyvalent counterion.

7. An ink set for use in an ink-jet printer, comprising
a) a first ink containing:
(a1) an aqueous ink medium,
(a2) a first colour pigment dispersed in the ink medium, and
(a3) optionally a first dispersant,
wherein the first colour pigment and/or the first dispersant bearing ionic groups,
b) a second ink containing:
(b1) an aqueous ink medium and
(b2) a second colour pigment and optionally a second dispersant,
wherein the second colour pigment acting as precipitant for the first colour pigment, carbon black having a cationic group on the surface being excluded.

8. An ink set according to claim 7, **characterized in that** the second colour pigment and/or the second dispersant contribute to an ionic strength of the second ink such that mixing of first and second inks produces an ionic strength that lies above the ionic strength critical for the precipitation of the first colour pigment.

9. An ink set according to claim 7, **characterized in that** the second colour pigment and/or the second dispersant bear a charge that is opposite to the charge of the first colour pigment and/or of the first dispersant.

10. An ink set according to any one of claims 7 to 9, **characterized in that** the second dispersant is a polyelectrolyte.

11. An ink set according to claim 10, **characterized in that** the polyelectrolyte is a styrene-phosphate block copolymer and/or a polyelectrolyte, is a styrene-phosphate block copolymer and/or a quaternary amine-glycose block copolymer.

12. An ink set for use in an ink-jet printer, comprising
a) a first ink containing:
(a1) an aqueous ink medium,
(a2) a first colour pigment dispersed in the ink medium, and
(a3) optionally a first dispersant,
wherein the first colour pigment and/or the first dispersant bearing ionic groups,
b) a second ink containing:
(b1) an aqueous ink medium and
(b2) a solvent dye dissolved in a water-insoluble solvent, optionally with an emulsifier for this system,
wherein the solvent dye, the emulsifier and/or the water-insoluble solvent acting as precipitant(s) for the first colour pigment.

13. An ink set according to claim 12, **characterized in that** the emulsifier bears a charge that is opposite to the charge of the first colour pigment and/or of the first dispersant.

14. An ink set according to any one of the preceding claims, **characterized in that** the first colour pigment is a surface-modified pigment.

15. An ink set according to any one of claims 1 to 13, **characterized in that** the first dispersant is a block copolymer.

16. An ink set according to claim 15, **characterized in that** the block copolymer is an acrylate-styrene block copolymer.
